# EUROPEAN PATENT SPECIFICATION

(11) **EP 1 571 426 B1**
(45) Date of publication and mention of the grant of the patent: **22.06.2016**
(21) Application number: 05003712.6
(22) Date of filing: 22.02.2005
(51) Int. Cl.: G01D 5/245, G01D 5/54

(54) **Displacement encoder**
Positionsgeber
Capteur de déplacement

(30) Priority: 04.03.2004 JP 2004060208
(43) Date of publication of application: 07.09.2005
(73) Proprietor: Dr. Johannes Heidenhain GmbH, 83292 Traunreut (DE)
(72) Inventor: Yamashita, Mamoru, Kiyose-shi Tokyo-to 204-0003 (JP); Haga, Hiroshi, Fuchu-shi Tokyo-to 183-0034 (JP); Yamamoto, Takeshi, Hachioji-shi Tokyo-to 193-0826 (JP); Schramm, Andre, Sagamihara-shi Kanagawa-ken 229-1103 (JP)

(56) References cited:
- EP-A2- 0 463 643
- JP-A- 5 079 853
- US-A- 4 988 945
- US-A- 4 990 909

## Description

The present invention relates to an encoder. The present invention also relates to a multiple rotation detection mechanism attached to a rotating body, e.g., a motor, or other measured object moving linearly that is able to measure the displacement magnitude of the measured object, i.e., the rotation number and/or rotational angle, or is able to measure n rotations (an integer not including n = 0) and/or the rotational direction of the encoder detecting the movement position.

In addition to a mechanism for detecting the displacement magnitude in a single rotation, a multiple rotation-type encoder may be provided with a rotation detection mechanism. This rotation detection mechanism counts one rotation or n rotations (an integer not including n = 0) and the rotation direction, thereby detecting the rotation direction, the number of rotations, and the absolute position per single rotation.

This multiple rotation-type encoder backs up the sensor signal detection circuit and rotation number counter with a battery when the main power source is turned off so the rotation number count operation and rotation number data can be maintained.

The rotation number data detection system in the rotation detection mechanism of this encoder is a detection system using either a magnetic or an optical method. In both cases, a 1P/1R pattern is formed in the encoding plate. The signals for the rotation number count (1A) and the signals for direction discrimination (1 B) are detected in the magnetic method by such components as an MR sensor and in the optical method by such components as a photodiode and phototransistor, and the rotation number count is processed.

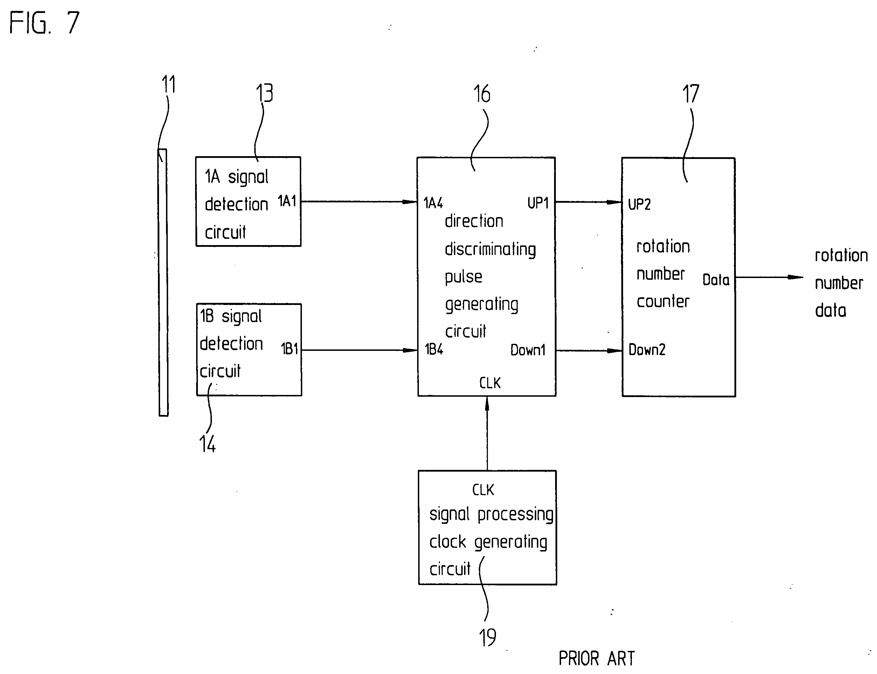

Figure 7 is a block diagram of a conventional magnetic detection method. In Figure 7, a magnetic pattern may be formed in the magnetic encoding plate 11 so as to generate a single magnetic change per rotation. The magnetic pattern in the magnetic encoding plate 11 is arranged at a predetermined interval, which is read by a 1A signal detection circuit 13 and a 1B signal detection circuit 14 provided with magnetic detection elements. The 1A signals and 1B signals outputted from the 1A signal detection circuit 13 and the 1 B signal detection circuit 14 as phase different signals corresponding to the magnetic pattern are applied to the direction discriminating pulse generating circuit 16.

The direction discriminating pulse generating circuit 16 determines the rotation direction from the phase difference between the 1A signals and the 1B signals, synchronizes with the clock signals CLK from the signal processing block generating circuit 19, and outputs add pulse UP or subtract pulse DOWN from the add pulse output UP1 or the subtract pulse output DOWN1. The add pulse UP or subtract pulse DOWN outputted in this manner is inputted to the input ports UP2, DOWN2 on the rotation number counter 17, and the rotation number (n rotation) corresponding to the rotation direction is measured. The measured rotation number is outputted from the output port DATA as the rotation number data, read by devices such as the measuring device and control device, and the necessary processing is performed.

A conventional encoder having this type of magnetic rotation detection mechanism and an optical rotation detection mechanism is described in Japanese Published Patent Application No. 6-3159.

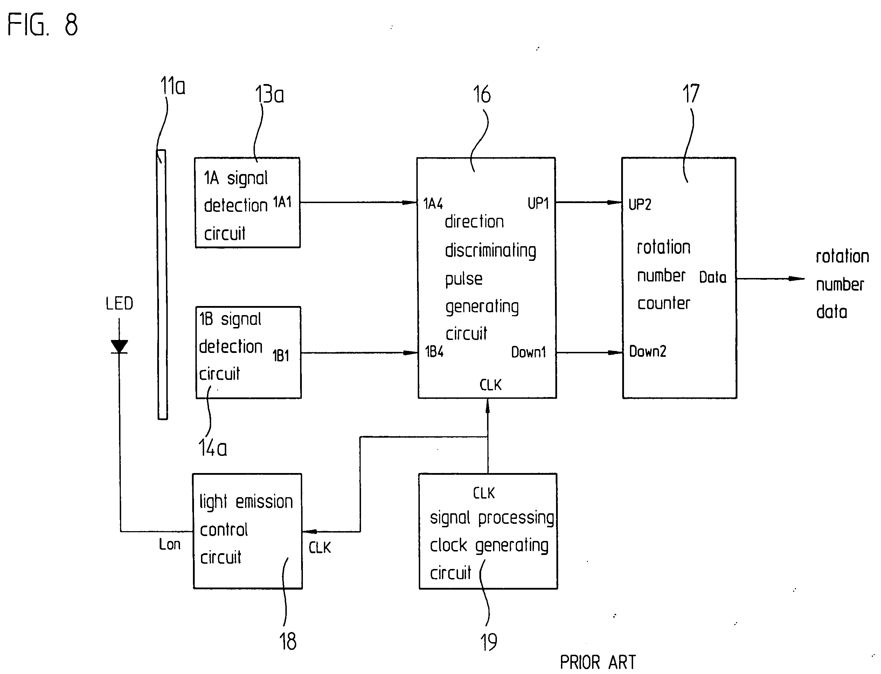

Figure 8 is a block diagram of a conventional optical detection method. In Figure 8, a slit pattern is formed in the optical encoding plate (slit plate) 11a so as to generate one block light/admit light state per rotation. The slit pattern in the slit plate 11 a is arranged at a predetermined interval, which is read by a 1A signal detection circuit 13a and a 1B signal detection circuit 14a provided with optical detection elements. A light emitting diode LED is arranged in a position opposite the optical detection element with the slit plate 11 a interposed. It emits light when operated by drive signals from the light emission control circuit 18. The clock pulses CLK are inputted from the signal processing clock generating circuit 19 to the light emission control circuit 18 so that intermittent drive signals synchronized with the clock signals can be outputted.

The 1A signals and 1B signals outputted from the 1A signal detection circuit 13a and the 1 B signal detection circuit 14a as phase different signals corresponding to the slit pattern are applied to the direction discriminating pulse generating circuit 16. Because the rest of the configuration is identical to the one shown in Figure 7, no further explanation of the identical components denoted by the same numbers is necessary.

An encoder using this intermittent drive method is described in Japanese Published Patent Application No. 11-6745, and a conventional technology devised to extend battery life by backing up the multiple rotation detection portion only is described in Japanese Published Patent Application No. 10-73458.

However, the magnetic detection method requires at least two magnetic detection elements to detect the 1A and 1B signals and requires many expensive MR sensors, and this is considered to be a significant impediment to cost reduction. Also, the current normally flowing to the magnetic detection elements may be many times larger than what is actually used. This may increase the amount of current consumed and may lead to a reduction in battery life.

The optical method requires a regular flow of current to the light emitting diode LED to detect the slits, but intermittent operation for operating the light emitting diode only for a predetermined period of time has been devised to reduce the amount of current consumed. When the off period in intermittent light emission is lengthened, the amount of current consumed may be reduced and battery life may be extended. However, the response rate of the detection circuit may be lowered and the rotational velocity that the measured object may use may be greatly curtailed. When the off period in intermittent light emission is shortened, the response rate of the detection circuit may be raised, but the amount of current consumed may be increased and battery life may be shortened.

A further absolute-type rotary encoder is known from JP 5-079853 A. In addition to an absolute rotation position detecting means for quantitatively detecting an absolute rotation position within one rotation of a rotating disk by means of a photoelectric element, a magnetic part is partially provided on the rotating disk with respect to its rotating direction and the part is detected by a magnetic resistor element so as to find that the rotating disk is at a rotation phase, where an origin position is detected by the absolute rotational position detecting means, within a predetermined phase range extending continuously on both sides of the rotating direction. When a power source is OFF, ON-state of the magnetic resistor element and an electric circuit for counting the number of rotations of the rotating disk is maintained by a battery, and the magnetic resistor element is used to turn the photoelectric element ON only when the rotating disk is detected to be within the predetermined phase range extending from both sides of the rotating direction where the origin position is detected by the absolute rotation position detecting means.

It is an object of the invention to provide a rotation number data detection-type encoder that may reduce costs and power consumption by reducing the number of expensive magnetic detection elements. Furthermore the current consumption of the encoder shall be reduced.

This object is accomplished by an encoder with the features of claim 1.

In an example embodiment of the present invention, an encoder includes an encoder main body for measuring the displacement magnitude of a measured object that includes a rotation detection portion for counting n rotations (an integer not including n = 0) of the measured object and a displacement magnitude detection portion for measuring the displacement magnitude of the measured object. The rotation detection portion includes a magnetic detection portion for detecting the magnetic change in a magnetic rotating body and an optical detection portion for detecting a slit in an encoding plate.

Phase difference signals may be formed by the magnetic detection portion and the optical detection portion of the rotation detection portion.

According to the invention, the optical detection portion of the rotation detection portion is shared with the optical detection portion of the displacement magnitude detection portion.

The optical detection portion of the rotation detection portion may use the optical detection portion of the displacement magnitude detection portion.

The optical detection portion may drive the light emitting element only during the period of time required to detect the encoding plate when a detection signal is obtained from the magnetic detection portion, and may suspend the drive signal to the light emitting element when a detection signal is not obtained from the magnetic detection portion.

An example embodiment of the present invention may reduce the quantity of expensive magnetic detection elements, may reduce costs, and may extend battery life by lowering the amount of current normally flowing.

Also, optimization of the drive system for the optical detection portion may further reduce the amount of current consumed and may dramatically extend battery life.

In an example embodiment of the present invention, an encoder includes an encoder main body for measuring the displacement magnitude of a measured object including a rotation detection portion for counting n rotations (an integer not including n = 0) of the measured object and a displacement magnitude detection portion for measuring the displacement magnitude of the measured object. The rotation detection portion includes a magnetic detection portion for detecting the magnetic change in a magnetic rotating body and an optical detection portion for detecting a slit in an encoding plate.

By installing a magnetic detection portion and optical detection portion in the rotation detection portion, the number of magnetic detection elements may be reduced and the amount of current consumed may also be reduced.

The signals 1A for the rotation number count (1A signals) may be generated by the magnetic detection portion, and the direction discriminating signals 1 B (1 B signals) may be generated by the optical detection portion, and these are the phase difference signals. In this manner, the light emitting element drive signals for 1 B signal detection may be suspended, for example, until the 1A signals have been inputted, thereby reducing current consumption, and 1 B signals may be obtained from the displacement magnitude detection portion used to measure the displacement magnitude of the measured object. In this manner, the current consumed may be further reduced, a cost reduction effect may be obtained from sharing the optical system, and smaller and thinner devices may be provided.

The encoder main body includes a displacement magnitude detection portion provided with an encoding plate (slit plate) to measure the displacement magnitude of the measured object, e.g., the amount of rotation, and an optical element to detect the encoding (slit) in the encoding plate, a rotation detection portion provided with a magnetic member for detecting a single rotation or n rotations (an integer not including n = 0) and the rotational direction, a magnetic element for detecting the magnetic change in the magnetic member, an encoding plate and an optical element, and an electrical circuit for processing the signals obtained from the elements when required. These are the basic features of the encoder. The measured object may be a motor, internal combustion engine, or a rotating mechanism connected to a motor or engine in order to be rotated, etc.

The displacement magnitude detection portion may measure the displacement magnitude (rotational amount, rotational angle) of the measured object within a single rotation, and the precision of the encoder is set to detect a minute displacement magnitude within a single rotation. This displacement magnitude detection portion may be a magnetic detection method combining a magnetic sensor with a magnetic encoding plate including a magnetic pattern, or an optical method combining an optical sensor with an optical encoding plate including a slit pattern. However, in the example embodiments described below, the use of an optical method may be provided in order to share the optical system with the rotation detection portion.

The rotation detection portion may detect the rotation number and rotational direction over one or more rotations. However, the rotation number to be counted is not restricted to a single rotation. In other words, n rotations (an integer not including n = 0) may be measured such as 1/3 of a rotation, 1/2 of a rotation, 2 rotations, etc. The rotations n to be measured may be determined freely based on such factors as the specifications of the encoder.

The magnetic detection portion in the rotation detection portion may be configured from a device, element or circuit employing a magnetic detection method used for conventional purposes. For example, it may be configured from a magnetic rotating body (magnetic encoding plate) with a magnetic pattern to generate one, two or more changes in the magnetic field within a single rotation, a magnetic detection element for detecting the magnetic changes in the magnetic rotating body, and a bias magnet for applying a bias magnetic field if necessary. The optical detection portion in the rotation detection potion may be configured from a device, element or circuit employing an optical detection method used for conventional purposes. For example, it may be configured from an encoding plate (optical encoding plate) with a slit to generate one, two or more one block light/admit light patterns within a single rotation, an optical detection element for detecting the slit in the encoding plate, and a light emitting element.

Also, the optical detection portion may be shared or integrated with the optical detection portion in the displacement magnitude detection portion. By sharing circuits and components, costs may be lowered, space may be saved, and the amount of current consumed may be reduced.

The magnetic detection portion and optical detection portion may function as a single two-in-one rotation detection unit. Because phase difference signals may be outputted from the magnetic detection portion and optical detection portion, they are used as the rotation count signals (1A signals) and rotational direction discriminating signals (1 B signals).

The detection signals from the magnetic detection portion may be used as the rotation count signals (1A signals), and the optical detection portion may be controlled during rotational direction discriminating signal (1 B signal) detection. In other words, the rotational direction discriminating signals (1 B signals) may not have to be detected until after the rotation count signals (1A signals) have been detected. In this manner, the magnetic detection portion using a magnetic detection element that consumes less current is normally operated, the optical detection portion is operated after the rotation count signals (1A signals) have been detected, and the rotational direction discriminating signals (1 B signals) are detected. By operating the optical detection portion only when necessary, the amount of current consumed may be reduced somewhat.

The magnetic detection element detects the magnetic poles or the magnetic change in the magnetic rotating body. The magnetic detection element may include a magnetic resistance (MR) element, but any element such as a Hall element or Hall-effect device that functions in a similar manner may be used.

The light emitting element and light receiving element may include a light emitting diode (LED) or photodiode and a photosensor such as a phototransistor. However, a laser diode or electroluminescence may be used as the light emitting element, and a photosensitive semiconductor element may be used. An element combining a light emitting element and a light receiving element such as a photointerrupter or photoreflector may also be used.

These and other features and advantages of the present invention will be appreciated as the same becomes better understood by reference to the following detailed description when considered in connection with the accompanying drawings.
- Figure 1: is a block diagram of an encoder of an example embodiment of the present invention.
- Figure 2: is a block diagram of an encoder of a further example embodiment of the present invention.
- Figure 3: is a block diagram of an encoder of a further example embodiment of the present invention.
- Figure 4: is a block diagram of an encoder of a further example embodiment of the present invention.
- Figure 5: is a timing chart for the operation of encoders arranged as illustrated in Figures 1 and 2.
- Figure 6: is a timing chart for the operation of encoders arranged as illustrated in Figures 3 and 4.
- Figure 7: is a block diagram of a conventional magnetic encoder.
- Figure 8: is a block diagram of a conventional optical encoder.

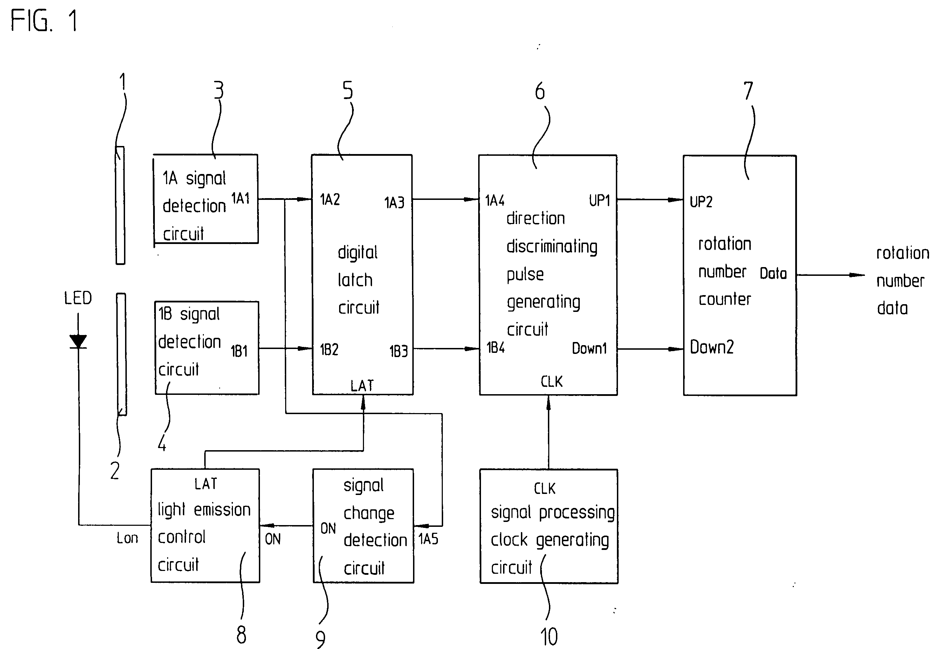

The following is an explanation of example embodiments of the present invention with reference to the drawings. Figure 1 is a block diagram of a detection method in an example embodiment of the present invention. In this example embodiment, the circuit for detecting the rotation number count signals (1A) uses a magnetic method (MR sensor), and the circuit for detecting the direction discriminating signals (1B) uses an optical method (photosensor). This explanation describes the operation during battery backup, which may be needed to reduce the amount of current consumed.

In this example embodiment, a magnetic pattern is formed on the magnetic encoding plate 1 so that the N/S poles reverse during a single rotation. Also, a slit pattern is formed on the optical encoding plate 2 so that a block light/admit light pattern is produced once during a single rotation. The positional relationship between the two patterns and between the magnetic encoding plate 1 and the optical encoding plate 2 are adjusted so that the phase relationship between the phase difference signals obtained from them may be optimized.

The 1A signal detection circuit 3 has a magnetic detection element for detecting the magnetic pattern on the magnetic encoding plate 1 and a circuit for driving the element and retrieving the 1A signals. The output port 1A1 for outputting 1A signals is connected to the input port 1A2 on the data latch circuit 5. The 1 B signal detection circuit 4 includes an optical element (light receiving element) for detecting the slit pattern in the optical encoding plate 2 and a circuit for driving the element and obtaining the 1B signals. The output port 1B1 for outputting the 1 B signals is connected to the input port 1 B2 on the data latch circuit 5.

The data latch circuit 5 in a mode of the light emission control circuit 8 is synchronized with the operation of the light emitting element LED driven for a predetermined period, such as the period needed to detect the optical slit, based on the operation of the magnetic detection circuit, and latches the output from the 1A signal detection circuit 3 and the 1B signal detection circuit 4. For this reason, the latch signal input port LAT is connected to the latch signal output port LAT on the light emission control circuit. The output ports 1A3, 1 B3 corresponding to the input ports 1A2, 1 B2 are connected to the input ports 1A4, 1B4, respectively, on the direction discriminating pulse generating circuit 6. The data latch circuit 5 may be configured from an element or circuit with a general data latch function.

The light emission control circuit 8 includes a circuit arranged to drive the light emitting element LED connected to the output port LON so that the outputted latch signals are synchronized with the drive signals, and an input port ON allowing for the input of drive enable signals from the outside so that output signals from the outside may be enabled and disabled. The drive signals may include pulse signals that enable operation only during a predetermined time period. The light emission control circuit 8 may be configured from a combination including a driver element enabling supply of sufficient drive current to the operated light emitting element such as an LED, an oscillating circuit for generating signals in a predetermined time interval, and various gate elements. Also, because the light emission control circuit 8 may operate whether or not it is synchronized with the signal processing clock, the oscillating circuit may use the clock signals from the signal processing clock 10.

The direction discriminating pulse generating circuit 6 processes the 1A, 1B signals inputted from the data latch circuit 5 while synchronized with the clock signals CLK applied from the signal processing clock generating circuit 10, and generates an add count signal UP or subtract count signal DOWN. These signals are outputted to output port UP1 or DOWN1. The output ports UP1, DOWN1 on the direction discriminating pulse generating circuit 6 are connected to the input ports UP2, DOWN2 on the rotation number counter 7. As a result, the add count signals UP and subtract count signals DOWN from the direction discriminating pulse generating circuit 6 are inputted to the rotation number counter, and the internal data undergoes an upcount (increment) or downcount (decrement). In this manner, the number of rotations (n rotations) corresponding to the rotational direction is measured. The measured number of rotations is outputted from the output port DATA as the rotation number data. This is retrieved by the measuring device or control device, and the necessary processing is performed.

The output port 1A1 on the 1A signal detection circuit 3 is connected to the input port 1A5 on the signal change detection circuit 9 to detect changes in the 1A signals. The output port ON in the signal change detection circuit 9 is connected to the input port ON in the light emission control circuit 8 to enable/disable the output LON in the light emission control circuit using the output signal ON from the signal change detection circuit 9.

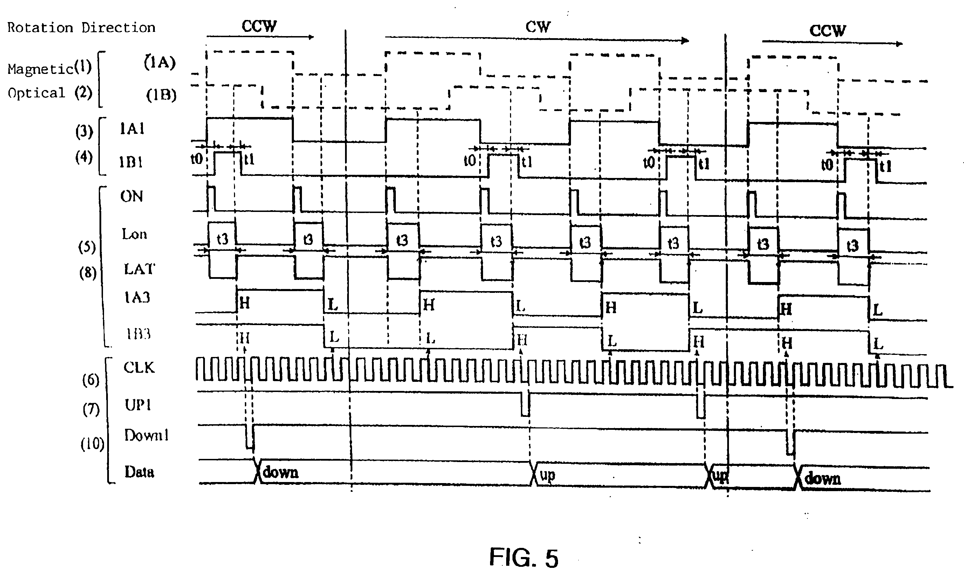

The timing chart for this operation is illustrated in Figure 5. In Figure 5, the numbers in parentheses correspond to the numbers indicated in Figure 1. In Figures 1 and 5, the patterns in the magnetic encoding plate 1 and the optical encoding plate 2 change according to the rotational operation of the encoder. In other words, counterclockwise CCW → clockwise CW → counterclockwise CCW. At this time, the 1A signals at 1A1 (1A2, 1A5) change based on the pattern of the magnetic encoding plate 1. When the change in 1A signals at 1A5 is detected, an ON signal is outputted to enable the light emission control circuit 8. Once received, the light emission control circuit 8 outputs drive signal LON at and beyond drive time t3 allowing 1 B signal detection to operate the light emitting element, and output latch data signals LAT synchronized with this. At the maximum detection rate (maximum rotational velocity) of the encoder, the drive time t3 is set to the period allowing detection of the slit in the optical encoding plate 2. At other times, the light emission control circuit 8 suspends output of drive signal LON.

When the light emitting element is driven by drive signal LON, it is synchronized and detects 1B signals. The 1B signals appearing at 1 B1 are held on a time t0 and time t1 delay. The delay time for the other signals is disregarded. On the rising edge of the latch signals LAT, the 1A signals and 1B signals appearing at 1A1 and 1B1 are latched and appear at 1A3 (1A4) and 1 B3 (1 B4). The direction discriminating pulse generating circuit synchronizes the H/L points of change in the 1A3 signals and 1B3 signals with the clock pulse CLK and then compares them. In this state, the rotational direction and the necessity of a count are determined. If necessary, an up count pulse UP is outputted from port UP1 or a down count pulse DOWN is outputted from port DOWN1. In this manner, a down count or up count is applied to the rotational data DATA based on the rotational direction. In other words, in a count state, an UP1 signal or DOWN1 signal is sent to the rotation number count, and the rotation number counter value is updated. In a non-count state, neither an UP1 signal nor a DOWN1 signal is outputted, and the rotation number counter value is retained.

The operation under backup power was explained, but the operation when the main power source is ON may be the same as during backup even though the power source is not the battery. However, it may also be switched to an operating mode in which light emitting element LED is usually ON so that the direction discriminating signals (1 B) may be detected. The data latch circuit 5 may not be required and may be omitted in this situation.

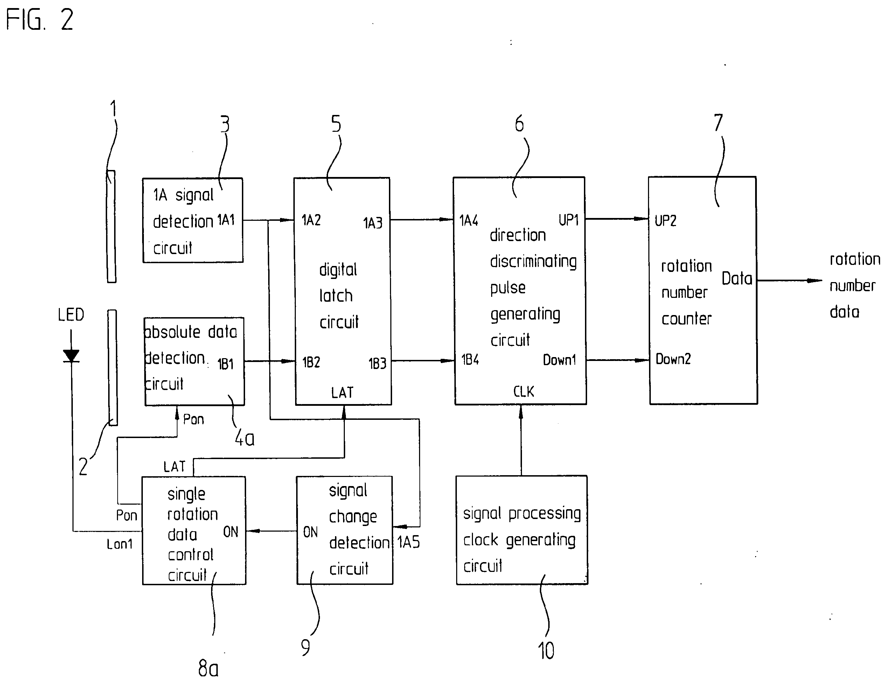

Figure 2 is a block diagram illustrating a further example embodiment of the present invention. In this example embodiment, the circuit for detecting the rotation number count signals (1A) uses a magnetic method (MR sensor), and the circuit for detecting the direction discriminating signals (1 B) uses a single rotation absolute data detection circuit. This explanation describes the operation during battery backup, which may be needed to reduce the amount of current consumed.

In Figure 2, the 1B signal detection circuit includes the optical detection portion of the displacement magnitude detection portion. In other words, it includes the single rotation absolute data detection circuit 4a. Instead of a light emission control circuit 8, a signal rotation data control circuit 8a is used. The connections for the control input port ON, the output port LON and the latch signal output port LAT on the single rotation data control circuit 8a are the same as those on the light emission control circuit 8 illustrated in Figure 1. The output port PON for outputting PON signals synchronized with the LON signals is connected to the control input port PON on the 1 B signal detection circuit 4a. Because the rest of the configuration is identical to that illustrated in Figure 1, further explanation of identical components denoted by the same numbers is omitted.

As illustrated in Figures 1 and 5, the encoding plates are moved by the rotation of the encoder shaft. The 1A signal detection circuit 3 detects the magnetic field of the encoding plate and, when the rotation number count signals (1A) change, the signal change detection circuit 9 detects the change in the 1A1 signals, the single rotation data control circuit 8a is operated, and the drive signal LON and control signal PON are outputted to operate the light emission element LED and the single rotation absolute sensor circuit at time t3 and beyond enabling detection of single rotation absolute data. In this manner, the direction discrimination signal 1B1 state converted from the single rotation absolute signals is detected.

When verification of the 1A1 signal and 1B1 signal state has been completed, the direction discriminating pulse generating circuit 6 determines the rotational direction and the count state. In a count state, an UP1 signal or DOWN1 signal is sent to the rotation number count based on the rotational direction, and the rotation number counter value is updated. In a non-count state, neither an UP1 signal nor a DOWN1 signal is outputted, and the rotation number counter value is retained.

The operation under backup power was explained above. However, because the direction discriminating signals (1 B) may be generated from the single rotation absolute data, the light emitting element LED and the single rotation absolute sensor circuit may be switched to normal operating mode when the main power source is ON. The processing may also be performed using the value of the single rotation absolute data without generating direction discriminating signals 1 B1.

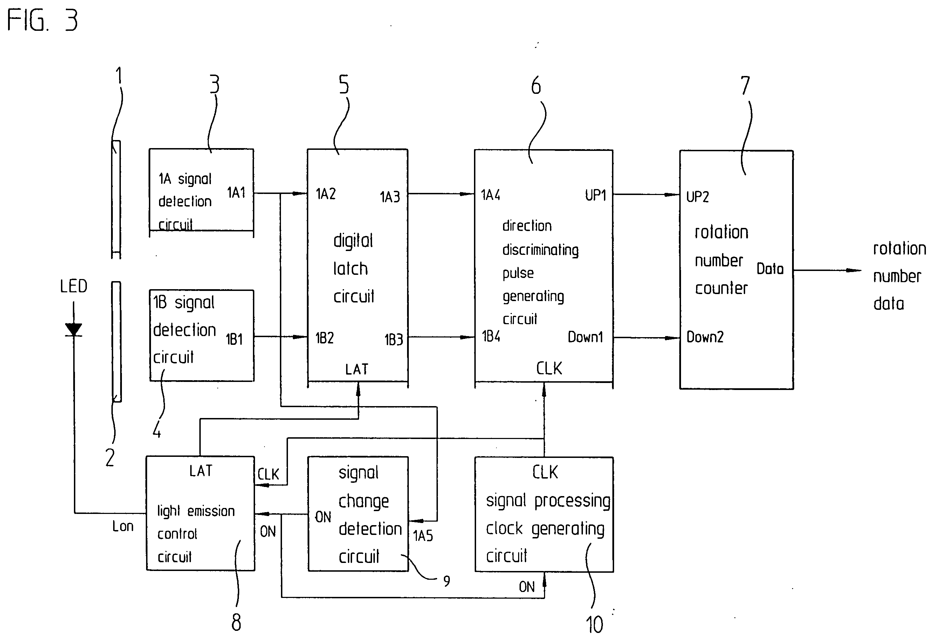

Figure 3 is a block diagram illustrating a further example embodiment of the present invention. In this example embodiment, an input port ON for operational control is added to the signal processing clock circuit 10 in the configuration illustrated in Figure 1, and this port ON is connected to the output port ON in the signal change detection circuit 9. By connecting the output port ON in the signal change detection circuit 9 to the input port ON for operational control in the signal processing clock circuit 10, the signal processing clock circuit 10 may be operated using ON signals outputted from the signal change detection circuit 9. In other words, the signal processing clock may be operated in the period extending from after the change in the rotation number count signals (1A) has been detected to the end of the rotation number data count process.

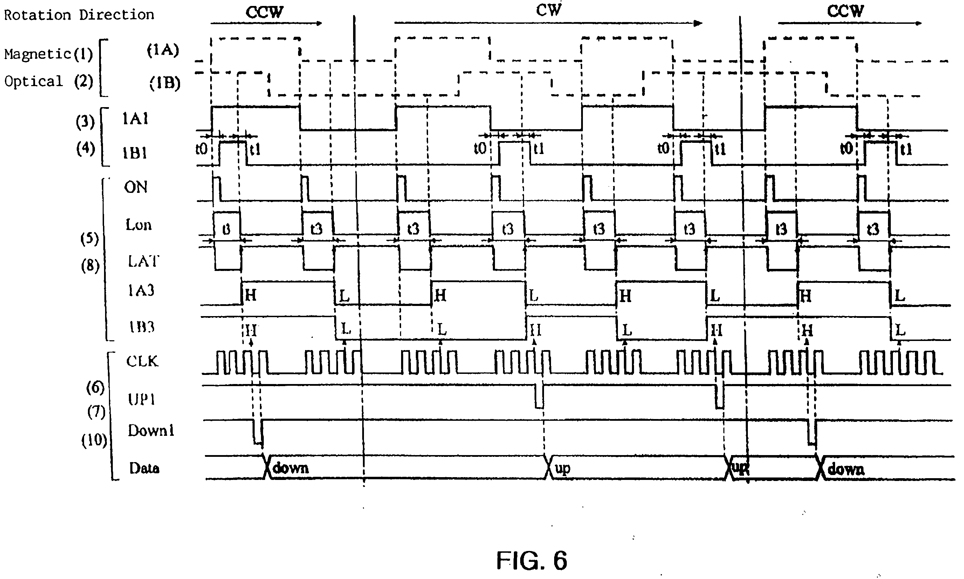

The timing chart for this operation is illustrated in Figure 6. In Figure 6, the clock signal CLK is suspended after the ON signal is detected and a predetermined time period longer than time t3 has lapsed. By operating the signal processing clock signal 10 only when necessary, the amount of current consumed may be further reduced. Because the rest of the configuration is identical to that illustrated in Figures 1 and 5, further explanation of identical components denoted by the same numbers is omitted.

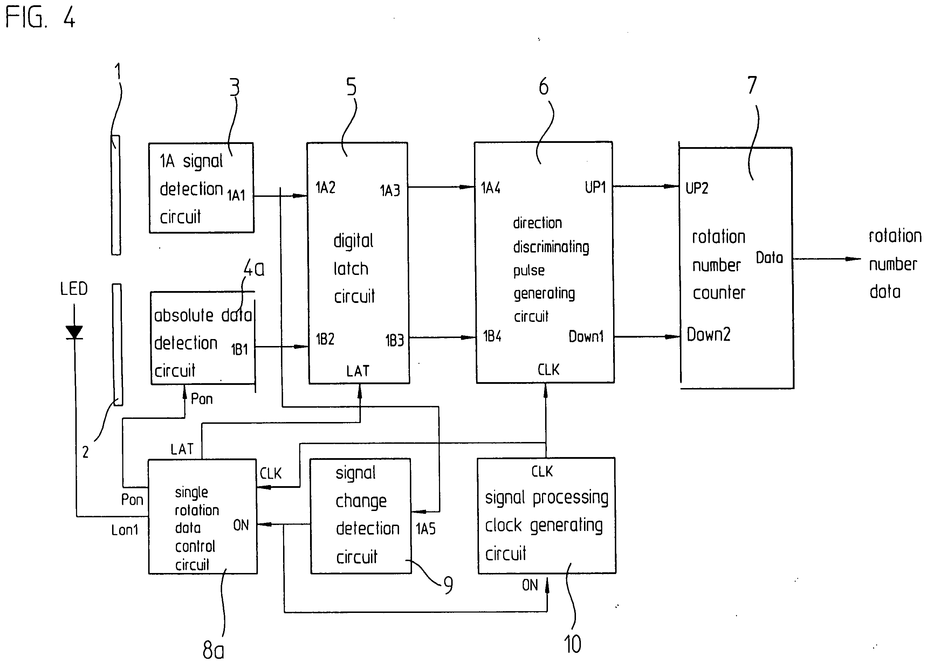

Figure 4 is a block diagram illustrating a further example embodiment of the present invention. In this example embodiment, as in Figure 3, an input port ON for operational control is added to the signal processing clock circuit 10 in the configuration illustrated in Figure 2, and this port ON is connected to the output port ON in the signal change detection circuit 9. Because the rest of the configuration is identical to that illustrated in Figures 2, 3 and 6, further explanation of identical components denoted by the same numbers is omitted.

Example embodiments of the present invention are explained above. However, the present invention is by no means restricted to these example embodiments, and several modifications and applications are possible within the intended scope hereof. For example, the light emitting element LED may be operated intermittently.

Example embodiments of the present invention may be applied to encoders used for so-called variable position detection in robots, automatic machinery and other production equipment, etc., as well as in automobiles, airplanes and other moving bodies, etc.

## Claims

1. An encoder, comprising:
an encoder main body configured to measure a displacement magnitude of a measured object, the encoder main body including
- a displacement magnitude detection portion configured to measure a displacement magnitude of the measured object and
- a rotation detection portion configured to count a number of rotations of the measured object, the rotation detection portion including
- a magnetic detection portion (3) configured to detect a magnetic change in a magnetic rotating body and
- an optical detection portion (4) configured to detect a slit in an encoding plate (2), the optical detection portion (4) being shared with an optical detection portion of the displacement magnitude detection portion and
- a signal processing clock circuit (10) adapted to generate clock signals (CLK) and
- a direction discrimination pulse generating circuit (6) adapted to process signals of the magnetic detection portion (3) and the optical detection portion (4) to generate signals (UP1, DOWN1) indicative of the number and the direction of rotations, wherein the direction discrimination pulse generating circuit (6) determines the rotational direction and the necessity of a count and being adapted to process the signals of the magnetic detection portion (3) and the optical detection portion (4) synchronized with the clock signals (CLK).

2. The encoder according to claim 1, wherein the magnetic detection portion (3) and the optical detection (4) portion are configured to form phase difference signals.

3. The encoder according to claim 1, wherein the optical detection portion (4) is configured to drive a light emitting element only during a period of time required to detect the encoding plate (2) when a detection signal is obtained from the magnetic detection portion (3) and to suspend a drive signal to the light emitting element when a detection signal is not obtained from the magnetic detection portion (3).

4. The encoder according to claim 1, wherein the signal processing clock circuit (10) being operated only when necessary.

## Patentansprüche

1. Codierer, der Folgendes umfasst:
einen Codiererhauptkörper, der konfiguriert ist, eine Verschiebungsgröße eines Messobjekts zu messen, wobei der Codiererhauptkörper Folgendes enthält:
- einen Verschiebungsgröße-Detektionsabschnitt, der konfiguriert ist, eine Verschiebungsgröße des Messobjekts zu messen, und
- einen Rotationsdetektionsabschnitt, der konfiguriert ist, eine Anzahl von Rotationen des Messobjekts zu zählen, wobei der Rotationsdetektionsabschnitt Folgendes enthält:
- einen magnetischen Detektionsabschnitt (3), der konfiguriert ist, eine magnetische Veränderung in einem rotierenden magnetischen Körper zu detektieren, und
- einen optischen Detektionsabschnitt (4), der konfiguriert ist, einen Spalt in einer Codiererplatte (2) zu detektieren, wobei der optische Detektionsabschnitt (4) gemeinsam mit einem optischen Detektionsabschnitt des Verschiebungsgröße-Detektionsabschnitts verwendet wird, und
- eine Signalverarbeitungstaktschaltung (10), die dafür ausgelegt ist, Taktsignale (CLK) zu erzeugen, und
- eine Richtungsunterscheidungs-Impulserzeugungsschaltung (6), die dafür ausgelegt ist, Signale des magnetischen Detektionsabschnitts (3) und des optischen Detektionsabschnitts (4) zu verarbeiten, um Signale (UP1, DOWN1) zu erzeugen, die die Anzahl und die Richtung der Rotationen anzeigen, wobei die Richtungsunterscheidungs-Impulserzeugungsschaltung (6) die Rotationsrichtung und die Notwendigkeit einer Zählung bestimmt und dafür ausgelegt ist, die Signale des magnetischen Detektionsabschnitts (3) und des optischen Detektionsabschnitts (4) synchronisiert mit den Taktsignalen (CLK) zu verarbeiten.

2. Codierer nach Anspruch 1, wobei der magnetische Detektionsabschnitt (3) und der optische Detektionsabschnitt (4) konfiguriert sind, Phasendifferenzsignale zu erzeugen.

3. Codierer nach Anspruch 1, wobei der optische Detektionsabschnitt (4) konfiguriert ist, ein lichtemittierendes Element nur während eines Zeitraums anzusteuern, der erforderlich ist, um die Codierplatte (2) zu detektieren, wenn ein Detektionssignal von dem magnetischen Detektionsabschnitt (3) erhalten wird, und ein Ansteuersignal für das lichtemittierende Element auszusetzen, wenn kein Detektionssignal von dem magnetischen Detektionsabschnitt (3) erhalten wird.

4. Codierer nach Anspruch 1, wobei die Signalverarbeitungstaktschaltung (10) nur dann betrieben wird, wenn es notwendig ist.

## Revendications

1. Codeur, comprenant :
un corps principal de codeur configuré pour mesurer une grandeur de déplacement d'un objet mesuré, le corps principal de codeur comportant
- une partie de détection de grandeur de déplacement configuré pour mesurer une grandeur de déplacement de l'objet mesuré et
- une partie de détection de rotation configurée pour compter un nombre de rotations de l'objet mesuré, la partie de détection de rotation comportant
- une partie de détection magnétique (3) configurée pour détecter un changement magnétique dans un corps rotatif magnétique et
- une partie de détection optique (4) configurée pour détecter une fente dans une plaque de codage (2), la partie de détection optique (4) étant partagée avec une partie de détection optique de la partie de détection de grandeur de déplacement et
- un circuit d'horloge de traitement de signal (10) adapté pour générer des signaux d'horloge (CLK) et
- un circuit de génération d'impulsions de discrimination de sens (6) adapté pour traiter des signaux de la partie de détection magnétique (3) et de la partie de détection optique (4) pour générer des signaux (UP1, DOWN1) indicatifs du nombre et du sens de rotation, dans lequel le circuit de génération d'impulsions de discrimination de sens (6) détermine le sens de rotation et la nécessité d'un compte et étant adapté pour traiter les signaux de la partie de détection magnétique (3) et de la partie de détection optique (4) synchronisés avec les signaux d'horloge (CLK).

2. Codeur selon la revendication 1, dans lequel la partie de détection magnétique (3) et la partie de détection optique (4) sont configurées pour former des signaux de différence de phase.

3. Codeur selon la revendication 1, dans lequel la partie de détection optique (4) est configurée pour commander un élément émetteur de lumière uniquement durant une période de temps requise pour détecter la plaque de codage (2) quand un signal de détection est obtenu à partir de la partie de détection magnétique (3) et interrompre un signal de commande de l'élément émetteur de lumière quand un signal de détection n'est pas obtenu de la partie de détection magnétique (3).

4. Codeur selon la revendication 1, dans lequel le circuit d'horloge de traitement de signal (10) est actionné uniquement quand cela est nécessaire.
